# EUROPEAN PATENT APPLICATION

(11) **EP 4 604 350 A1**
(43) Date of publication of application: **20.08.2025**
(21) Application number: 23877456.6
(22) Date of filing: 17.08.2023
(51) Int. Cl.: H02J 7/00, B60L 53/80, B60L 53/30

(54) **BATTERY EXCHANGE STATION AND OPERATION METHOD THEREOF**

(30) Priority: 14.10.2022 KR 20220132753
(71) Applicant: LG Energy Solution, Ltd., Seoul 07335 (KR)
(72) Inventor: KIM, Duk You, Daejeon 34122 (KR)
(74) Representative: Goddar, Heinz J.
(86) International application number: PCT/KR2023/012155
(87) International publication number: WO 2024/080526

(57) **Abstract**

A battery swapping station according to an embodiment disclosed herein includes N slots into each of which a battery pack is insertable, an electrode plate electrically connected to a battery pack inserted into each of M slots being less than N, and a power supply configured to charge a battery pack provided in each of the M slots through the electrode plate, in which center point of each of the N slots, when viewed in a first direction, is spaced apart from a first point at equal intervals, the electrode plate is rotatable in the first direction as an axis, and the electrode plate is electrically connected to the battery pack inserted into each of the M slots among the N slots due to the rotation.

## Description

### [TECHNICAL FIELD]

### CROSS-REFERENCE TO RELATED APPLICATION

This application claims priority to and the benefit of Korean Patent Application No. 10-2022-0132753 filed in the Korean Intellectual Property Office on October 14, 2022, the entire contents of which are incorporated herein by reference.

### TECHNICAL FIELD

Embodiments disclosed herein relate to a battery swapping station and an operating method thereof.

### [BACKGROUND ART]

Recently, battery swapping stations capable of exchanging discharged batteries with charged batteries have been developed and distributed. The battery swapping station may include a slot into which a battery may be inserted and a power supply capable of charging the battery inserted into the slot.

As the battery swapping station is intended for battery exchange (or replacement) by a user, one or more slots may be left empty. However, the power supply may be connected because the user may insert the battery into an empty slot at any time. Thus, the battery swapping station has to be designed with a power capacity corresponding to the total number of slots without considering empty slots.

### [DISCLOSURE]

### [TECHNICAL PROBLEM]

Therefore, as the battery swapping station is designed to have a power capacity greater than necessary, production and maintenance costs may increase.

Accordingly, a method may be required to ensure that the battery swapping station has an optimal power capacity.

Technical problems of the embodiments disclosed herein are not limited to the above-described technical problems, and other unmentioned technical problems would be clearly understood by one of ordinary skill in the art from the following description.

### [TECHNICAL SOLUTION]

A battery swapping station according to an embodiment disclosed herein includes N slots into each of which a battery pack is insertable, an electrode plate electrically connected to a battery pack inserted into each of M slots being less than N, and a power supply configured to charge a battery pack provided in each of the M slots through the electrode plate, in which center point of each of the N slots, when viewed in a first direction, is spaced apart from a first point at equal intervals, the electrode plate is rotatable in the first direction as an axis, and the electrode plate is electrically connected to the battery pack inserted into each of the M slots among the N slots due to the rotation.

In the battery swapping station according to an embodiment, when viewed in the first direction, an angle between adjacent slots among the N slots with respect to the first point may be identical.

In the battery swapping station according to an embodiment, N may be 4 and M may be 3, and the electrode plate may be arranged in contact with the slots on rear surfaces opposite to front surfaces of the respective slots into which the battery packs are inserted.

In the battery swapping station according to an embodiment, the electrode plate may rotate based on one of a first rotation direction or a second rotation direction opposite to the first rotation direction, based on a previous empty slot and a current empty slot, and the empty slot may be (M-N) slot that is not electrically connected between the battery and the power supply through the electrode plate.

In the battery swapping station according to an embodiment, when a first index of the current empty slot is less than a second index of the previous empty slot, the electrode plate may rotate based on the first rotation direction, and when the first index is not less than the second index, the electrode plate may rotate based on the second rotation direction.

In the battery swapping station according to an embodiment, the first rotation direction may be a clockwise direction, and the second rotation direction may be a counterclockwise direction.

In the battery swapping station according to an embodiment, the electrode plate may rotate when replacement of the battery pack occurs.

An operating method of a battery swapping station according to an embodiment disclosed herein includes identifying replacement of a battery pack in N slots into each of which the battery pack is insertable, identifying an index of a current empty slot among the N slots, identifying one of a first rotation direction of an electrode plate or a second rotation direction opposite to the first rotation direction, based on the index of the current empty slot, and rotating the electrode plate based on the identified rotation direction to charge battery packs inserted into M slots except for the empty slot among the N slots.

In the operating method of the battery swapping station according to an embodiment, the identifying of the one rotation direction may include selecting the first rotation direction when a first index of the current empty slot is less than a second index of a previous empty slot and selecting the second rotation direction when the first index is not less than the second index.

In the operating method of the battery swapping station according to an embodiment, the first rotation direction may be a counterclockwise direction, and the second rotation direction may be a clockwise direction.

### [ADVANTAGEOUS EFFECTS]

According to various embodiments disclosed herein, a battery swapping station may be designed to have a power capacity as small as a power capacity corresponding to an empty slot.

The effects of the battery swapping station according to the disclosure of the present document are not limited to the effects mentioned above, and other effects not mentioned will be clearly understood by those of ordinary skill in the art according to the disclosure of the present document.

### [DESCRIPTION OF DRAWINGS]

FIG. 1 is a block diagram of a battery swapping station according to an embodiment of the present disclosure.
FIG. 2 shows power supplies, an electrode plate, and slots of a battery swapping station according to an embodiment of the present disclosure.
FIG. 3 shows a state corresponding to rotation of an electrode plate according to an embodiment of the present disclosure.
FIG. 4 is a flowchart showing an operating method of a battery swapping station according to an embodiment of the present invention.

With regard to the description of the drawings, similar reference numerals may be used to refer to similar or related components.

### [MODE FOR INVENTION]

Hereinafter, embodiments of the present disclosure will be described with reference to the accompanying drawings. However, the description is not intended to limit the present disclosure to particular embodiments, and it should be construed as including various modifications, equivalents, and/or alternatives according to the embodiments of the present disclosure.

It should be appreciated that embodiments of the present document and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly or wirelessly), or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the multiple entities may be separately disposed in different components. According to various embodiments disclosed herein, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

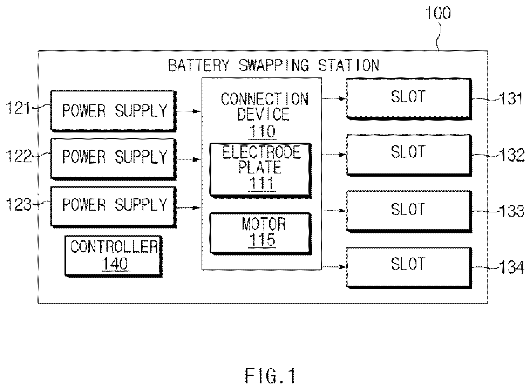

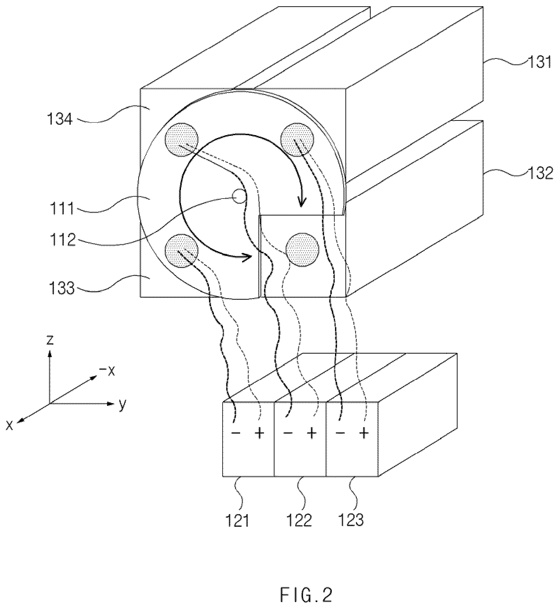

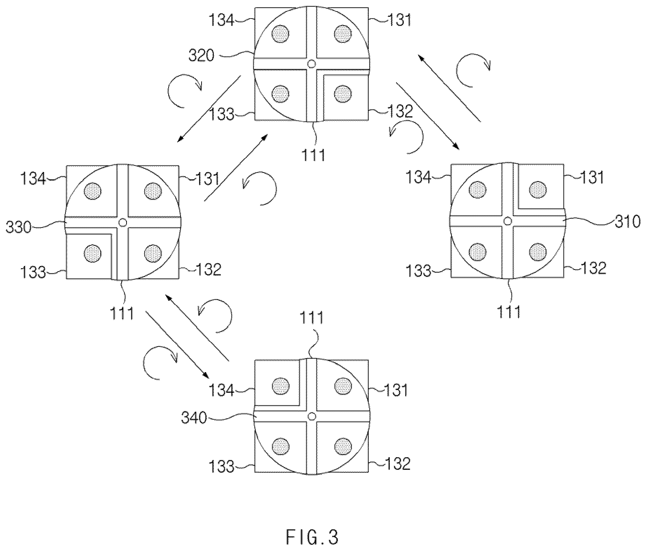

FIG. 1 is a block diagram of a battery swapping station 100 according to an embodiment of the present disclosure. FIG. 2 shows power supplies 121, 122, and 123, an electrode plate 111, and slots 131, 132, 133, and 134 of the battery swapping station 100, according to an embodiment of the present disclosure. FIG. 3 shows a state corresponding to rotation of the electrode plate 111 according to an embodiment of the present disclosure.

Referring to FIG. 1, the battery swapping station 100 may include a connection device 110, the power supplies 121, 122, and 123, the slots 131, 132, 133, and 134, and a controller 140. In an embodiment, the connection device 110 may include the electrode plate 111 and a motor 115.

While it is shown in FIG. 1 that there are three power supplies 121, 122, and 123 and four slots 131, 132, 133, and 134, they are merely examples. According to an embodiment, the battery swapping station 100 may include N slots and M power supplies less than N. Herein, (N - M) may be 1.

A battery pack may be inserted into each of the slots 131, 132, 133, and 134. A battery pack may be inserted into a front surface of each of the slots 131, 132, 133, and 134, and a rear surface of each of the slots 131, 132, 133, and 134 may contact the electrode plate 111 of the connection device 110.

Referring to FIG. 2, the slots 131, 132, 133, and 134 may have a rectangular parallelepiped structure. In another embodiment, the slots 131, 132, 133, and 134 may have a structure that is different from a rectangular parallelepiped (e.g., a structure in which a front surface and a rear surface are polygonal and side surfaces are rectangular, or a cylindrical structure).

When battery packs are inserted into the slots 131, 132, 133, and 134, the battery packs may be charged through the power supplies 121, 122, and 123. The power supplies 121, 122, and 123 may charge the battery packs inserted into the slots 131, 132, 133, and 134 connected through the electrode plate 111 of the connection device 110.

The number of power supplies 121, 122, and 123 may be less than the number of slots 131, 132, 133, and 134. Thus, the electrode plate 111 may electrically connect a battery pack inserted into each of less slots than the slots 131, 132, 133, and 134 to the power supplies 121, 122, and 123.

The total number of battery packs inserted into the slots 131, 132, 133, and 134 may be equal to the number of power supplies 121, 122, and 123. For example, when the number of slots 131, 132, 133, and 134 is N and the number of power supplies 121, 122, and 123 is M, the total number of battery packs inserted into the N slots 131, 132, 133, and 134 may be M. Herein, (N - M) may be 1. According to an embodiment, N may be 4 and M may be 3.

Referring to FIG. 2, the electrode plate 111 may not electrically connect at least one of the slots 131, 132, 133, and 134 to the power supplies 121, 122, and 123. The electrode plate 111 may be arranged in contact with the slots 131, 132, 133, and 134 on a rear surface opposite to a front surface of each of the slots 131, 132, 133, and 134.

In an embodiment, when viewed in a first direction (-x direction), center points of the slots 131, 132, 133, and 134 may be spaced from a first point 112 at equal intervals. For example, an interval between the center point of the slot 131 and the first point 112 may be equal to an interval and an angle between the center point of the slot 132 and the first point 112.

In an embodiment, when viewed in the first direction (-x direction), an angle between adjacent slots among the slots 131, 132, 133, and 134 with respect to the first point 112 may be identical. For example, an angle among the slot 131, the first point 112, and the slot 132 may be equal to an angle among the slot 131, the first point 112, and the slot 133.

It can be seen from FIG. 2 that the slots 131, 133, and 134 are electrically connected to the power supplies 121, 122, and 123 through the electrode plate 111, and the slot 132 is not electrically connected to the power supplies 121, 122, and 123. Hereinbelow, a slot electrically connected to the power supplies 121, 122, and 123 will be referred to as a 'connected slot', and a slot not electrically connected to the power supplies 121, 122, and 123 will be referred to as a 'non-connected slot'.

In an embodiment, the connected slot and the non-connected slot may be changed by rotation of the electrode plate 111. In an embodiment, the battery pack inserted into the connected slot may be electrically connected to the power supplies 121, 122, and 123 by rotation of the electrode plate 111.

In an embodiment, the motor 115 may rotate the electrode plate 111 in the first direction (-x direction) as an axis. In an embodiment, the motor 115 may rotate the electrode plate 111 in a clockwise direction or a counterclockwise direction with respect to the first point 112 of the electrode plate 111.

The controller 140 may control the motor 115 to rotate the electrode plate 111 in the clockwise direction or the counterclockwise direction.

The controller 140 may identify replacement of the battery pack. For example, the controller 140 may identify replacement of the battery pack based on a signal from a sensor (not shown) of each of the slots 131, 132, 133, and 134. Herein, the sensor (not shown) may sense removal and/or insertion of the battery pack.

In an embodiment, the controller 140 may identify, as replacement of the battery pack, a case where a new battery pack is inserted into an empty slot and the battery pack is removed from a charging slot. Herein, the empty slot may refer to a slot into which the battery pack is not inserted, and the charging slot may refer to a slot into which the battery pack is inserted.

In an embodiment, the controller 140 may identify an index of the current empty slot among the slots 131, 132, 133, and 134. Herein, each of the slots 131, 132, 133, and 134 may be given with an index. For example, the slots 131, 132, 133, and 134 may be sequentially given with indices of 1, 2, 3, and 4, respectively.

In an embodiment, the controller 140 may identify one of a first rotation direction (e.g., the counterclockwise direction) of the electrode plate 111 or a second rotation direction (e.g., the clockwise direction) opposite to the first rotation direction, based on an index of the current empty slot.

In an embodiment, the controller 140 may select the first rotation direction when the index of the current empty slot is less than an index of a previous empty slot. In an embodiment, the controller 140 may select the second rotation direction when the index of the current empty slot is not less than the index of the previous empty slot.

For example, the controller 140 may identify one of the first rotation direction (e.g., the counterclockwise direction) of the electrode plate 111 or the second rotation direction (e.g., the clockwise direction) opposite to the first rotation direction, as shown in Table 1 below.

**[Table 1]**

| | 1 | 2 | 3 | 4 |
|---|---|---|---|---|
| 1 | - | Counterclockwise direction | Counterclockwise direction | Counterclockwise direction |
| 2 | Clockwise direction | - | Counterclockwise direction | Counterclockwise direction |
| 3 | Clockwise direction | Clockwise direction | - | Counterclockwise direction |
| 4 | Clockwise direction | Clockwise direction | Clockwise direction | - |

Referring to Table 1, when the indices of the previous empty slots are 2 to 4 and the index of the current empty slot is 1, the rotation direction of the electrode plate 111 may be the counterclockwise direction. When the indices of the previous empty slots are 3 to 4 and the index of the current empty slot is 2, the rotation direction of the electrode plate 111 may be the counterclockwise direction. When the index of the previous empty slot is 4 and the index of the current empty slot is 3, the rotation direction of the electrode plate 111 may be the counterclockwise direction. When the index of the previous empty slot is 1 and the index of the current empty slot is 2, the rotation direction of the electrode plate 111 may be the clockwise direction. When the indices of the previous empty slots are 1 and 2 and the index of the current empty slot is 3, the rotation direction of the electrode plate 111 may be the clockwise direction. When the indices of the previous empty slots are 1 to 3 and the index of the current empty slot is 4, the rotation direction of the electrode plate 111 may be the clockwise direction.

Referring to FIG. 3, in a state 310 where the slot 131 is an empty slot, when a new battery pack is inserted into the slot 131 and the battery pack inserted into the slot 132 is removed, then the current empty slot may be changed into the slot 132. In this case, for transition from the state 310 to a state 320, the electrode plate 111 may rotate in the clockwise direction. Due to transition from the state 310 to the state 320, the non-connected slot may be changed from the slot 131 to the slot 132. As the slot 131 is changed from the non-connected slot into the connected slot, the power supply connected to the slot 131 among the power supplies 121, 122, and 123 may charge the battery pack inserted into the slot 131.

In the state 320 where the slot 132 is an empty slot, when a new battery pack is inserted into the slot 132 and the battery pack inserted into the slot 131 is removed, then the current empty slot may be changed into the slot 131. In this case, for transition from a state 330 to the state 310, the electrode plate 111 may rotate in the counterclockwise direction. Due to transition from the state 320 to the state 310, the non-connected slot may be changed from the slot 132 to the slot 131. As the slot 132 is changed from the non-connected slot into the connected slot, the power supply connected to the slot 132 among the power supplies 121, 122, and 123 may charge the battery pack inserted into the slot 132.

Likewise, when the empty slot is changed from the slot 132 into the slot 133, the electrode plate 111 may rotate in the clockwise direction. When the empty slot is changed from the slot 133 into the slot 132, the electrode plate 111 may rotate in the counterclockwise direction. One of the power supplies 121, 122, and 123 may charge the battery pack inserted into the slot changing from the non-connected slot into the connected slot.

When the empty slot is changed from the slot 133 into the slot 134, the electrode plate 111 may rotate in the clockwise direction. When the empty slot is changed from the slot 134 into the slot 133, the electrode plate 111 may rotate in the counterclockwise direction. One of the power supplies 121, 122, and 123 may charge the battery pack inserted into the slot changing from the non-connected slot into the connected slot.

Last, when the empty slot is changed from the slot 131 into the slot 134, the electrode plate 111 may rotate in the clockwise direction. However, in this case, the non-connected slot may be sequentially changed from the slot 131 into the slot 132, the slot 133, then the slot 134. When the empty slot is changed from the slot 134 into the slot 131, the electrode plate 111 may rotate in the counterclockwise direction. However, in this case, the non-connected slot may be sequentially changed from the slot 134 into the slot 133, the slot 132, then the slot 131.

The battery swapping station 100 described with reference to FIGS. 1 to 3 may be designed to have a power capacity as small as a power capacity corresponding to an empty slot. The battery swapping station 100 may prevent wires from being twisted by a designated degree or more even when the electrode plate 111 rotates.

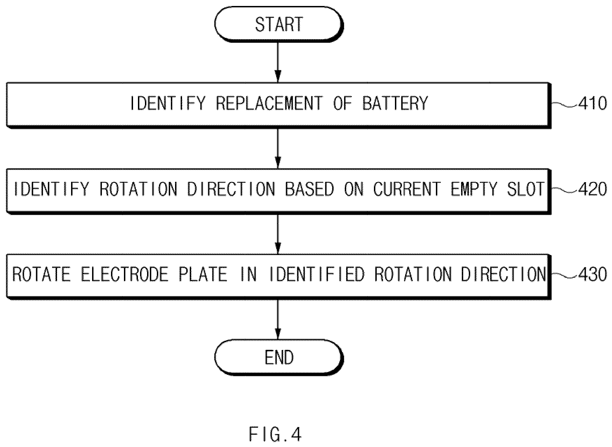

FIG. 4 is a flowchart showing an operating method of the battery swapping station 100 according to an embodiment of the present invention.

Referring to FIG. 4, in operation 410, the battery swapping station 100 may identify battery replacement. For example, the battery swapping station 100 may identify replacement of the battery pack based on a signal from a sensor (not shown) of each of the slots 131, 132, 133, and 134. Herein, the sensor (not shown) may sense removal and/or insertion of the battery pack.

In an embodiment, the battery swapping station 100 may identify, as replacement of the battery pack, a case where a new battery pack is inserted into an empty slot and the battery pack is removed from a charging slot. Herein, the empty slot may refer to a slot into which the battery pack is not inserted, and the charging slot may refer to a slot into which the battery pack is inserted.

In operation 420, the battery swapping station 100 may identify the rotation direction based on the current empty slot. In an embodiment, the controller 140 may select the first rotation direction (e.g., the counterclockwise direction) when the index of the current empty slot is less than the index of the previous empty slot. In an embodiment, the controller 140 may select the second rotation direction (e.g., the clockwise direction) when the index of the current empty slot is not less than the index of the previous empty slot. Herein, the slots 131, 132, 133, and 134 may be sequentially given with indices of 1, 2, 3, and 4, respectively.

In operation 430, the battery swapping station 100 may rotate the electrode plate 111 in the identified rotation direction. The battery swapping station 100 may rotate the electrode plate 111 such that the current empty slot is the non-connected slot.

## Claims

1. A battery swapping station comprising:
N slots into each of which a battery pack is insertable;
an electrode plate electrically connected to a battery pack inserted into each of M slots being less than N; and
a power supply configured to charge a battery pack provided in each of the M slots through the electrode plate,
wherein center point of each of the N slots, when viewed in a first direction, is spaced apart from a first point at equal intervals,
the electrode plate is rotatable in the first direction as an axis, and
the electrode plate is electrically connected to the battery pack inserted into each of the M slots among the N slots due to the rotation.

2. The battery swapping station of claim 1, wherein when viewed in the first direction, an angle between adjacent slots among the N slots with respect to the first point is identical.

3. The battery swapping station of claim 1, wherein N is 4 and M is 3, and the electrode plate is arranged in contact with the slots on rear surfaces opposite to front surfaces of the respective slots into which the battery packs are inserted.

4. The battery swapping station of claim 1, wherein the electrode plate rotates based on one of a first rotation direction or a second rotation direction opposite to the first rotation direction, based on a previous empty slot and a current empty slot, and
the empty slot is (M-N) slot that is not electrically connected between the battery and the power supply through the electrode plate.

5. The battery swapping station of claim 4, wherein when a first index of the current empty slot is less than a second index of the previous empty slot, the electrode plate rotates based on the first rotation direction, and
when the first index is not less than the second index, the electrode plate rotates based on the second rotation direction.

6. The battery swapping station of claim 4, wherein the first rotation direction is a clockwise direction, and the second rotation direction is a counterclockwise direction.

7. The battery swapping station of claim 1, wherein the electrode plate rotates when replacement of the battery pack occurs.

8. An operating method of a battery swapping station, the operating method comprising:
identifying replacement of a battery pack in N slots into each of which the battery pack is insertable;
identifying an index of a current empty slot among the N slots;
identifying one of a first rotation direction of an electrode plate or a second rotation direction opposite to the first rotation direction, based on the index of the current empty slot; and
rotating the electrode plate based on the identified rotation direction to charge battery packs inserted into M slots except for the empty slot among the N slots.

9. The operating method of claim 8, wherein the identifying of the one rotation direction comprises:
selecting the first rotation direction when a first index of the current empty slot is less than a second index of a previous empty slot; and
selecting the second rotation direction when the first index is not less than the second index.

10. The operating method of claim 8, wherein the first rotation direction is a counterclockwise direction, and the second rotation direction is a clockwise direction.
